Europäisches Patentamt

European Patent Office

Office européen des brevets

(11) Veröffentlichungsnummer : **0 069 221**
**B1**

(12) **EUROPÄISCHE PATENTSCHRIFT**

(45) Veröffentlichungstag der Patentschrift :
05.09.84

(21) Anmeldenummer : **82104226.4**

(22) Anmeldetag : **14.05.82**

(51) Int. Cl.³ : **B 29 F 1/00**

(54) **Anlage mit wenigstens einer Spritzgiessmaschine und Einrichtung zum Auswechseln der Werkzeugeinheit und der Plastifiziereinheit der Maschine.**

(30) Priorität : **02.07.81 CH 4374/81**

(43) Veröffentlichungstag der Anmeldung :
**12.01.83 Patentblatt 83/02**

(45) Bekanntmachung des Hinweises auf die Patenterteilung : **05.09.84 Patentblatt 84/36**

(84) Benannte Vertragsstaaten :
**AT DE FR IT**

(56) Entgegenhaltungen :
**Keine**

(73) Patentinhaber : **Netstal-Maschinen AG**
**CH-8752 Näfels (CH)**

(72) Erfinder : **Egger, Caspar**
**Schiltstrasse 38**
**CH-8750 Glarus (CH)**
Erfinder : **Krebser, Rudolf**
**Sonnengarten 3**
**CH-8862 Schübelbach (CH)**
Erfinder : **Leuzinger, Hans**
**Postweg 10**
**CH-8754 Netstal (CH)**

(74) Vertreter : **Willi, Anton, J.**
**Alsenmattstrasse 2**
**CH-8800 Thalwil (CH)**

**Beschreibung**

Gegenstand der vorliegenden Erfindung ist eine Anlage mit wenigstens einer Spritzgiessmaschine und einer Einrichtung zum Auswechseln der Werkzeugeinheit und der Plastifiziereinheit der Maschine.

Es ist bekannt, dass das manuelle Auswechseln der Werkzeugeinheit und/oder der Plastifizier- und Spritzeinheit, das bei Produkt- oder Spritzmaterialwechsel oder zu Revisionszwecken erforderlich ist, sehr zeitraubend und umständlich ist. Es sind deshalb schon Vorrichtungen vorgeschlagen worden, die der betreffenden Einheit fest zugeordnet, diese automatisch auszubauen, wegzutransportieren und durch eine neue zu ersetzen vermögen. Der Wechsel der betreffenden Einheit kann durch die ihr zugeordnete Vorrichtung zwar automatisch, d. h. ohne manuelles Eingreifen und relativ schnell erfolgen, ist aber, da jeder Einheit speziell zugeordnet, konstruktiv und steuerungstechnisch kompliziert und beeinträchtigt meist auch die Zugänglichkeit zu den Arbeitseinheiten der Maschine. Die vorliegende Erfindung bezweckt demgegenüber die Schaffung einer Spritzgiessmaschine mit Wechseleinrichtung, die mit wenigen, die Zugänglichkeit zu den Maschineneinheiten im Betrieb kaum störenden und überdies relativ einfach steuerbaren Vorrichtungen auskommt.

Zu diesem Zweck ist die erfindungsgemässe Spritzgiessmaschine mit Wechseleinrichtung gekennzeichnet durch ein die Spritzgiessmaschine und ein Einheiten-Magazin übergreifendes Rahmengestell, auf welchem eine mit einer Greifvorrichtung wahlweise an der einen oder andern Einheit ansetzbare Transportvorrichtung gelagert ist zum Abnehmen bzw. Einsetzen und zum Transportieren der jeweiligen Einheit zwischen Maschineneinbaustelle und Lagerplatz im Magazin, wobei an der Maschine den auswechselbaren Maschineneinheiten zugeordnete ein- und ausrückbare Halte-, Antriebs- und Energiezufuhrkupplungen angeordnet sind und die Betätigungsmittel für die Kupplungen ebenso wie für die Transportvorrichtung mit einer gemeinsamen Steuervorrichtung in Verbindung stehen.

Als besonders vorteilhaft hat sich als Transportvorrichtung ein auf dem Rahmengestell quer zur Maschinenachse horizontal bewegbarer Brückenkran mit parallel zur Maschinenachse bewegbarer Laufkatze und an dieser angeordnetem vertikal bewegbarem Tragarm mit Greifvorrichtung für die Einheiten erwiesen. Die Greifvorrichtung lässt sich dadurch dreidimensional innerhalb des Rahmengestells bewegen; sie kann somit über die auszuwechselnde Einheit gefahren und auf diese abgesenkt werden, so dass sie diese Einheit ergreifen und nach dem Lösen der Kupplungen zu einer Lagerstelle im Magazin befördern und dort absetzen kann. Umgekehrt kann beim Einsetzen einer dem Magazin entnommenen Wechseleinheit in die Maschine verfahren werden. Für die Betätigung der verschiedenen Kupplungen, z. B. der Kupplung zwischen Schnecke und Antriebswelle der Plastifiziereinheit, der Kupplung zwischen Ausstosser und dessen Betätigungsvorrichtung der Werkzeugeinheit und den Kupplungen zwischen den verschiedenen Heiz- und/oder Druckmediumanschlüssen ebenso die Kupplungen zwischen eventuellen elektrischen Anschlüssen haben sich hydraulische oder pneumatische Vorrichtungen als besonders vorteilhaft erwiesen.

Zweckmässig enthält das Magazin etwa in seitlicher Flucht mit dem Maschinenplatz der betreffenden Einheiten zwei nebeneinanderliegende Lagerstellen, wobei jeweils an der einen eine Wechseleinheit bereitliegt, während die andere zum Absetzen der auszuwechselnden Einheit vorgesehen ist. Diese Lagerstellen sind zweckmässig mit Funktionsanschlüssen, z. B. für Heiz- und/oder Kühlmedium, versehen, an welche die Einheiten mittels entsprechender Kupplungen anschliessbar sind.

Mit der erfindungsgemässen Einrichtung lässt sich ein notwendig werdender Einheitenwechsel vollautomatisch und in kürzester Zeit ohne jeden manuellen Eingriff durchführen, wobei dank der dreidimensional bewegbaren, beiden Einheiten zugeordneten Greifvorrichtung die freie Zugänglichkeit zu Maschine und Magazin kaum behindert wird.

In der beiliegenden Zeichnung ist die Erfindung beispielsweise schematisch dargestellt. In der Zeichnung ist

Figur 1 eine Seitenansicht der Spritzgiessmaschine im Vertikalschnitt durch die Wechseleinrichtung nach Linie B-B in Fig. 2, und

Figur 2 eine Draufsicht auf die Spritzgiessmaschine und das Magazin bei abgenommenem Brückenarm.

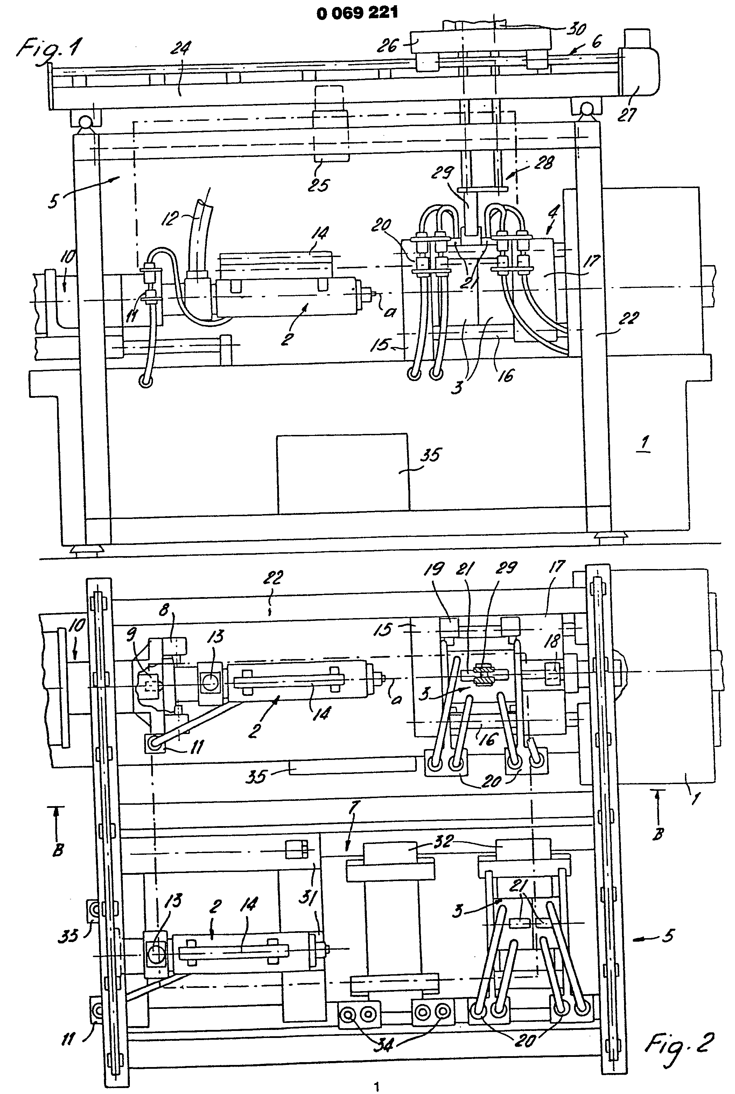

Die gezeichnete Anlage umfasst einerseits eine Kunststoff-Spritzgiessmaschine 1, die in bekannter Weise eine liegend angeordnete Plastifizier- und Spritzeinheit 2 und eine dazu koaxiale, die aus aus zwei Formhälften gebildete Werkzeugeinheit 3 tragende Bewegungs- und Schliesseinrichtung 4 aufweist, und anderseits eine Wechseleinrichtung 5 mit Transportvorrichtung 6 und Einheitenmagazin 7 zum automatischen Auswechseln der Plastifizier- und Werkzeugeinheiten 2, 3 der Maschine 1. Die eine Plastifizier- und Förderschnecke (nicht gezeichnet) enthaltende Plastifiziereinheit 2 ist mittels automatisch lösbarer Spannelemente 8 auf dem Maschinengestell fixiert. Die Schnecke der Plastifiziereinheit 2 ist über eine automatisch ein- und ausrückbare Kupplung 9 zur Drehmoment- und Achsialkraftübertragung mit der Schneckenantriebsvorrichtung 10 verbunden. Eine weitere automatisch ein- und ausrückbare Kupplung 11 dient der lösbaren Verbindung der Plastifiziereinheit 2 mit dem entsprechenden Maschinenanschluss zur Heizenergiezufuhr zur Einheit 2. Mit 12 ist in Fig. 1 die in und ausser Flucht mit der Einfüllöffnung 13 des Plastifizierzylinders schwenkbare abschliessbare Granulatzuführung bezeichnet. An der Oberseite der Plastifiziereinheit 2 ist ein Kupplungssteg 14 vorgesehen, dessen Funktion im folgenden noch näher erläutert wird.

Dem düsenseitigen Ende der Plastifiziereinheit 2 gegenüber und koaxial zu deren Arbeitsachse a ist die feststehende Formtragplatte 15 angeordnet, in der in üblicher Weise die im Gehäuse der Schliesseinheit 4 verankerten Zuganker 16 angreifen, auf welchen die bewegliche Formtragplatte 17 geführt ist. Diese bewegliche Formtragplatte 17 trägt auch den Ausstosser, der über eine automatisch ein- und ausrückbare Kupplung 18 mit dem die mit Stiften versehene Ausstosserplatte in der einen Formhälfe verbundenen Uebertragungsbolzen gekuppelt ist. Mittels Lösbarer Spannelemente 19 sind an den beiden Formtragplatte 15, 17 die beiden Formhälften der Werkzeugeinheit 3 befestigt. Die Formhälften sind über automatisch ein- und ausrückbare Kupplungen 20 (z. B. zu Heiz- oder Kühlzwecken) mit entsprechenden Energiezufuhranschlüssen der Maschine verbunden. An der Oberseite der Formhälften der Werkzeugeinheit 3 sind Kupplungsstege 21 (entsprechend dem Kupplungssteg 14 der Plastifiziereinheit 2) vorgesehen.

Die der beschriebenen Spritzgiessmaschine 1 zugeornete Wechseleinrichtung 5 besitzt ein sowohl die Spritzgiessmaschine als auch den frontseitig neben ihr liegenden, als Einheitenmagazin 7 dienenden Raum übergreifendes Rahmengestell 22 mit rechteckförmigem Grundriss. Auf den oberen, rechtwinklig zur Maschinenachse a verlaufenden Querholmen 23 des Gestells 22 ist ein Brückenkran 24 (Fig. 1) gelagert und mittels eines Motors 25 z. B. über einen durch die Motorwelle angetriebenen Kettentrieb quer über das vom Rahmengestell überspannte Fed verschiebbar. Auf diesem Brückenkran 24 ist eine Laufkatze 26 gelagert und mittels eines Motors 26 z. B. ebenfalls über einen Kettentrieb parallel zur Maschinenachse verschiebbar. Die Laufkatze 26 trägt eine Hubvorrichtung 28, deren vertikal beweglicher Tragarm am unteren Ende eine Greifvorrichtung 29 aufweist ; dem Antrieb der Hubvorrichtung 28 dient ein Elektromotor 30. Die Greifvorrichtung 29 ist zum Zusammenwirken mit den Kupplungsstegen 14, 21 bestimmt.

Wie aus Fig. 2 ersichtlich, enthält das innerhalb des von der Laufkatze 26 bestrichenen Feldes neben der Maschine 1 liegende Magazin 7 seitlich der auf der Maschine montierten Plastifiziereinheit 2 zwei nebeneinander liegende Lagerstellen 31 für die Plastifiziereinheiten 2 und gegenüber der auf der Maschine montierten Werkzeugeinheit zwei Lagerstellen 32 für die Werkzeugeinheiten 3. Um keine unnötig grossen Vertikalbewegungen ausführen zu müssen, befinden sich die Lagerstellen 31, 32 zweckmässig etwa in gleicher Höhe wie die entsprechenden Lagerstellen der Einheiten 2, 3 an der Maschine. Dabei sind an diesen Lagerstellen 31, 32 Energieanschlussstellen 33 bzw. 34 für die entsprechenden Kupplungen 11 bzw. 20 der Einheiten 2 bzw. 3 vorgesehen. Dadurch ist es z. B. möglich, die beim Wechsel neu einzusetzenden Einheiten entsprechend vorzubereiten, z. B. vorzuwärmen.

Zu beachten ist, dass alle Bewegungs- bzw. Betätigungsvorrichtungen, die zum automatischen Wechseln der Einheiten wirksam werden sollen, also beispielsweise die Betätigungs vorrichtungen für die verschiedenen Kupplungen, Spannelemente und für die Granulatzuführung, ebenso wie die Schliesseinrichtung und die Motoren, an eine gemeinsam Steuervorrichtung 35 angeschlossen sind, so dass ein automatischer Ablauf des ganzen Wechselvorgangs gewährleistet ist.

Soll nun eine Werkzeugeinheit 3 und (oder) eine Plastifiziereinheit 2 ausgewechselt werden, so steuert die Steuervorrichtung 35 den Brückenkran 24 bzw. die Laufkatze 26 über die zwischen den Formplatten 15, 17 der Spritzgiessmaschine geschlossen gehaltene Werkzeugeinheit 3. Der vertikal bewegbare Tragarm der Hubvorrichtung 28 fährt mit geöffneter Greifvorrichtung 29 zu den Kupplungsstegen 21, der Werkzeugeinheit 3 und kuppelt sich dort an. Bereits während die Greifvorrichtung 28 abgesenkt wurde, oder spätertens jetzt, wird die Energiezufuhr zu den Werkzeughälften durch Ausrücken der Kupplungen 20 getrennt. Danach geben die Spannelemente 19 die Werkzeugeinheit 3 frei. Ebenso wird die Kupplung 18 zwischen Ausstosser und Uebertragungsbolzen zur Werkzeugeinheit geöffnet. Anschliessend wird die beweglich Formplatte 17 zurückgefahren, d. h. die Schliesseinheit 4 geöffnet. Somit hängt die Werkzeugeinheit 3 frei am vertikal beweglichen Tragarm der Hubvorrichtung 28, die sie als nächstes nach oben hievt. Anschliessend wird mittels der Laufkatze 26 und des Brückenkrans 24 die Werkzeugeinheit 3 über den leeren Werkzeug-Magazinplatz 32 gefahren und auf dessen Aufnahmevorrichtung abgesenkt. Dort wird die Werkzeugeinheit mittels der Kupplungen 20 mit den Energieanschlüssen 34 (z. B. zur Heizung bzw. Kühlung) verbunden und bei Bedarf auf Arbeitstemperatur gehalten oder zu einem späteren Zeitpunkt wieder auf Arbeitstemperatur gebracht. Die Greifvorrichtung 29 gibt nun die Kupplungsstege 21 der Werkzeugeinheit frei, und der Tragarm bewegt sich nach oben. Brückenkran 24 und Laufkatze 26 fahren nun über den Magazinplatz 32 der neu einzubauenden Werkzeugeinheit 3, wo sich die Greifvorrichtung 29 an der neuen Werkzeugeinheit 3 ankuppelt. Die Energiekupplungen 20 werden geöffnet, und so die im Magazin bereits auf Arbeitstemperatur gebrachte Werkzeugeinheit frei gegeben. Nun hebt der Tragarm die neue Werkzeugeinheit 3 in den Einbauraum der Schliesseinheit 4. Dort wird die Werkzeugeinheit zuerst auf der düsenseitigen Formplatte 15 mit den automatischen Spannelementen 19 festgekuppelt, worauf die bewegliche Formplatte 17 an die entsprechende Spannfläche der Werkzeugeinheit herangefahren und ebenfalls festgekuppelt wird. Als nächstes werden die Energiekupplungen 20 zwischen Maschine und Werkzeugeinheit zusammengefahren und aktiviert; ebenso wird die Kupplung 18 des Ausstossers, in die der Uebertragungsbolzen aus der Werkzeinheit durch das Zufahren der beweglichen Formplatte 17 eingeführt wurde, geschlossen, d. h. kraftschlüssig gemacht. Damit ist die Werkzeugeinheit auf der Spritzgiessmaschine spritzbereit.

In ähnlicher Weise wird die Plastifiziereinheit 2 ausgewechselt. Der Brückenkran 24 und die Laufkatze 26 werden über den Kupplungssteg 14 der auszuwechselnden Plastifiziereinheit 2 gefahren. Dann senkt sich der Tragarm mit der Greifvorrichtung 29 ab und kuppelt sich am Kupplungssteg an. Während dieser Zeit wurde die Energiezufuhrkupplung 11 gelöst. Ebenfalls während dieser Zeit geöffnet wurde auch die Schneckenkupplung 9, während die Granulatzuführung 12, die bereits vor dem Ausspritzen der Plastifiziereinheit 2 geschlossen wurde, jetzt weggeschwenkt wird, sodass nun die Spannelemente 8 am Spritzaggregat die Plastifiziereinheit 2 freigeben können. Die Laufkatze 26 fährt nun die Plastifiziereinheit 2 vom Spritzaggregat weg, hebt sie hoch und bringt sie zum Leerplatz im Magazin 7, wo die Plastifiziereinheit in die dafür vorgesehene Halterung 31 gelegt wird. Als nächstes wird die Energiekupplung 11 an den zugeordneten Anschluss 33 angekuppelt, um die Plastifiziereinheit 2 auf Temperatur zu halten oder sie vor dem nächsten Einsatz wieder auf die gewünschte Temperatur zu bringen. Die Greifvorrichtung 29 gibt nun die Plastifiziereinheit 2 frei und wird zur neu aufzuspannenden Plastifiziereinheit im Magazin gefahren und angekuppelt. In umgekehrter Reihenfolge wird, wie vorher beschrieben, die neue Plastifiziereinheit 2 in das Spritzaggregat der Maschine eingesetzt und gekuppelt. Danach ist die Spritzgiessmaschine wieder betriebsbereit, und z. B. auf Kommando des Betriebsüberwachungsrechners wird die Produktion wieder fortgesetzt.

Als Zusatz kann am vertikalbewegbaren Tragarm der Hubvorrichtung 28 ausser der Greifvorrichtung 29 ein weiterer leichterer Arm mit Greifmechanismus angebracht sein, der in entsprechender Position über der Schliesseinheit 4 in der Lage ist, während des Produktionsbetriebes die Spritzlinge aus der Werkzeugeinheit zu entnehmen und sie geordnet, z. B. auf eine Transportvorrichtung, abzusetzen. Selbstverständlich kann dieser zweite Arm auch direkt an der Laufkatze aufgehängt sein.

Des weiteren besteht die Möglichkeit, die Fahrebene des Brückenkrans 24 so zu erweitern, dass mit der gleichen Wechseleinrichtung mehrere Spritzgiessmaschinen bedient werden können, wobei die Magazine für die Werkzeug- und Plastifiziereinheiten zentral für alle Spritzgiessmaschinen zusammengefasst sind. Dabei könnten die Werkzeug- und Plastifiziereinheit an einer speziellen Station vorgewärmt werden, damit sie sofort nach dem Einbau in die Spritzgiessmaschine Betriebstemperatur haben und unmittelbar nach dem Einbau mit der Produktion begonnen werden kann.

Selbstverständlich kann bei Bedarf auch nur die Werkzeugeinheit oder nur die Plastifiziereinheit ausgewechselt werden.

## Ansprüche

1. Anlage mit wenigstens einer Spritzgiessmaschine und mit Einrichtung zum Auswechseln der Werkzeugeinheit und der Plastifiziereinheit der Maschine, gekennzeichnet durch ein die Spritzgiessmaschine (1) und ein Einheiten-Magazin (7) übergreifendes Rahmengestell (22), auf welchem eine mit einer Greifvorrichtung (29) wahlweise an der einen oder andern Einheit (2, 3) ansetzbare Transportvorrichtung (24, 26, 28) gelagert ist zum Abnehmen bzw. Einsetzen und zum Transportieren der jeweiligen Einheit (2, 3) zwischen Maschineneinbaustelle und Lagerplatz im Magazin (7), wobei an der Maschine (1) den auswechselbaren Maschineneinheiten (2, 3) zugeordnete ein- und ausrückbare Halte-, Antriebs- und Energiezufuhrkupplungen (8, 9, 11, 18, 19, 20) angeordnet sind und die Betätigungsmittel für die Kupplungen ebenso wie für die Transportvorrichtung mit einer gemeinsamen Steuervorrichtung (35) in Verbindung stehen.

2. Anlage nach Anspruch 1, dadurch gekennzeichnet, dass die Transportvorrichtung einen auf dem Rahmengestell (22) quer zur Maschinenachse (a) bewegbar gelagerten Brückenkran (24) mit parallel zur Maschinenachse (a) bewegbarer Laufkatze (26) aufweist, wobei die Laufkatze (26) mit einer Hubvorrichtung (28) versehen ist, deren vertikal bewegbarer Tragarm die Greifvorrichtung (29) aufweist.

3. Anlage nach Anspruch 2, dadurch gekennzeichnet, dass die auswechselbaren Einheiten (2, 3) mit Kupplungsstegen (14, 21) zum Zusammenwirken mit der Greifvorrichtung (29) versehen sind.

4. Anlage nach Anspruch 3, dadurch gekennzeichnet, dass das Magazin (7) für jede der auszuwechselnden Einheiten wenigstens zwei Lagerstellen (31, 32) aufweist, die je mit Energiezufuhranschlüssen (33, 34) für die entsprechenden Kupplungen (11, 20) der Einheiten (2, 3) versehen sind.

5. Anlage nach einem der Ansprüche 1 bis 4, dadurch gekennzeichnet, dass ein Sammelmagazin für mehrere Spritzgiessmaschinen vorgesehen ist, denen eine gemeinsame Wechseleinrichtung zugeordnet ist.

6. Anlage nach einem der Ansprüche 1 bis 5, dadurch gekennzeichnet, dass die Transportvorrichtung eine zusätzliche Greifvorrichtung aufweist zur kontinuierlichen Abnahme und Weitergabe der auf der Spritzgiessmaschine produzierten Spritzlinge an eine Fördervorrichtung.

## Claims

1. Apparatus comprising at least one injection moulding machine and a system for replacing the tool unit and the plasticiser unit of the machine, characterised by a carrying frame (22) overbridging the injection moulding machine (1) and a units magazine (7), on which is supported a conveying device (24, 26, 28) which may be lined up with the one unit or the other (2, 3) at will by means of a gripping device (29), for removing or inserting or conveying the unit (2, 3) in question between the machine attachment point and the storage point in the magazine (7), engageable and disengageable holding, driving and power feed clutches (8, 9, 11, 18, 19, 20) on the machine (1) being allocated to the exchangeable machine units (2, 3), the actuating means for the clutches as well as for the conveying device being connected to a common control device (35).

2. Apparatus according to claim 1, characterised in that the conveying device comprises a travelling or bridge crane (24) which is mounted on the carrying frame (22) for displacement transversely to the axis (a) of the machine and has a travelling carriage (26) displaceable parallel to the axis (a) of the machine, the travelling carriage (26) being provided with a lifting mechanism (28) having a vertically movable carrying arm that comprises the gripping device (29).

3. Apparatus according to claim 2, characterised in that the exchangeable units (2, 3) are provided with coupling flanges (14, 21) for cooperation with the gripping device (29).

4. Apparatus according to claim 3, characterised in that for each of the units which are to be exchanged, the magazine (7) has at least two storage points (31, 32) which are each provided with power feed connectors (33, 34) for the corresponding clutches (11, 20) of the units (2, 3).

5. Apparatus according to one of the claims 1 to 4, characterised in that a container magazine is provided for several injection moulding machines which have a common exchanging system allocated to them.

6. Apparatus according to one of the claims 1 to 5, characterised in that the conveying device has a complementary gripping mechanism for continuous removal and onward transmission of the mouldings produced on the injection moulding machine to a conveying system.

**Revendications**

1. Installation comportant au moins une machine de coulage par injection et un dispositif pour le remplacement de l'unité d'outil et de l'unité de ramollissement de la machine, caractérisée par un bâti (22), chevauchant la machine de coulage par injection (1), et un magasin (7) d'unités, sur lequel est monté un dispositif de transport (24, 26, 28), pouvant être placé sélectivement, avec un dispositif de préhension (29) au niveau d'une unité ou d'une autre (2, 3), pour l'enlèvement ou la mise en place et pour le transport de l'unité respective (2, 3) entre l'emplacement d'installation sur la machine et l'emplacement de stockage dans le magasin (7), des accouplements de fixation, d'entraînement et d'amenée d'énergie (8, 9, 11, 18, 19, 20), qui peuvent être accouplés et désaccouplés et associés aux unités interchangeables (2, 3) de la machine étant disposés sur la machine (1), et les moyens d'actionnement pour les accouplements étant associés, de même que pour le dispositif de transport, à un dispositif de commande commun (35).

2. Installation suivant la revendication 1, caractérisé en ce que le dispositif de transport comporte une grue-portique (24), montée de façon à pouvoir se déplacer sur le bâti (22) transversalement par rapport à l'axe (a) de la machine, qui comporte un chariot roulant (26) pouvant se déplacer parallèlement à l'axe (a) de la machine, le chariot roulant (26) étant muni d'un dispositif de levage (28) dont le bras-support pouvant se déplacer verticalement comporte le dispositif de préhension (29).

3. Installation suivant la revendication 2, caractérisée en ce que les unités (2, 3) pouvant être échangée sont munies de barrettes d'accouplement (14, 21) pour coopérer avec le dispositif de préhension (29).

4. Installation suivant la revendication 3, caractérisée en ce que le magasin (7) comporte, pour chacune des unités devant être changées, au moins deux emplacements de stockage (31, 32) qui sont respectivement munis de raccords d'amenée d'énergie (33, 34) pour les accouplements correspondants (11, 20) des unités (2, 3).

5. Installation suivant l'une des revendications 1 à 4, caractérisée en ce que pour plusieurs machines de coulage par injection est prévu un magasin collectif, auquel est associé un dispositif d'échange commun.

6. Installation suivant l'une des revendications 1 à 5, caractérisée en ce que le dispositif de transport comporte un dispositif de préhension supplémentaire pour le prélèvement et le transfert en continu des pièces coulées par injection, produites sur la machine de coulage par injection, sur un dispositif convoyeur.

Fig. 1

0 069 221

Fig. 2